Europäisches Patentamt

(19) European Patent Office

Office européen des brevets

(11) Numéro de publication: **0 280 622**
**B1**

(12) **FASCICULE DE BREVET EUROPEEN**

(45) Date de publication du fascicule du brevet:
26.09.90

(51) Int. Cl.⁵: **F16J 1/22**, F16C 11/06

(21) Numéro de dépôt: **88400398.9**

(22) Date de dépôt: **22.02.88**

(54) Piston pour moteurs à combustion interne et machines analogues.

(30) Priorité: **20.02.87 FR 8702203**

(43) Date de publication de la demande:
**31.08.88 Bulletin 88/35**

(45) Mention de la délivrance du brevet:
**26.09.90 Bulletin 90/39**

(84) Etats contractants désignés:
**CH DE ES FR GB IT LI NL SE**

(56) Documents cités:
**GB-A- 293 506**
**GB-A- 1 111 635**
**US-A- 4 043 255**

(73) Titulaire: **Melchior, Jean Frédéric, 126 Boulevard
Montparnasse, F-75014 Paris(FR)**

(72) Inventeur: **Melchior, Jean Frédéric, 126 Boulevard
Montparnasse, F-75014 Paris(FR)**

(74) Mandataire: **Lemoine, Michel et al, Cabinet Michel
Lemoine et Bernasconi 13 Boulevard des Batignolles,
F-75008 Paris(FR)**

ACTORUM AG

## Description

L'invention est relative aux pistons, destinés à coulisser dans les cylindres de moteurs alternatifs à combustion interne ou externe et compresseurs, c'est-à-dire de machines où un gaz de travail contenu dans le ou chaque cylindre par une surface transversale du piston est à la fois à haute pression et à haute température, et elle concerne de préférence, mais non exclusivement, les pistons pour moteurs alternatifs à combustion interne, à deux temps ou à quatre temps. L'invention est plus particulièrement relative à ceux de ces pistons qui possèdent, à l'intérieur d'une jupe extérieurement cylindrique, une portée partiellement sphérique destinée à recevoir à la manière d'une rotule la tête partiellement sphérique d'une bielle. Pour des raisons qui seront exposées ci-après, la portée du piston et/ou la tête de la bielle peuvent avoir, par construction, une forme qui, partiellement, n'est pas rigoureusement sphérique mais, pour simplifier l'exposé, on utilise dans ce contexte l'expression "sphérique" pour désigner indifféremment une forme rigoureusement ou approximativement sphérique.

De tels pistons sont décrits par exemple dans les brevets français no 965.449 et no 1.547.151 et le brevet britannique no 293.506. Dans ces pistons connus, les deux éléments partiellement sphériques du piston et de la bielle, qui sont en métal, se déplacent au contact l'un de l'autre, du moins si l'on fait abstraction du mince film d'huile de lubrification entretenu entre eux par introduction d'huile sous pression qui provient par exemple d'un canal passant longitudinalement à l'intérieur de la bielle (voir à cet égard le brevet français no 965.449 et le brevet britannique no 293.506).

L'invention a pour but de permettre à l'articulation entre le piston et la bielle de résister aux efforts importants appliqués sur le piston par les pressions maximales qui s'établissent cycliquement dans la chambre de volume variable délimitée par le piston à l'intérieur de son cylindre.

Dans ce qui suit, lorsque seront utilisées des expressions telles que "supérieure", "inférieure", "au-dessus" ou "au-dessous", il sera supposé que le piston est orienté de façon que son axe soit vertical et que la bielle se place au-dessous de ce piston. Cette hypothèse n'est destinée qu'à simplifier la description et n'implique donc pas que le piston soit effectivement orienté ainsi lorsqu'il est monté dans un moteur à combustion interne ou compresseur.

Selon un premier aspect de l'invention, le piston du type défini ci-dessus est essentiellement caractérisé en ce qu'il possède une cavité intérieure ouverte à l'opposé de la susdite surface transversale et limitée latéralement au moins en partie par une portée cylindrique de révolution ; en ce que l'espace limité à l'intérieur de cette cavité du piston par la tête partiellement sphérique de la bielle est rempli d'un fluide visqueux ou pâteux ou plastiquement déformable et pratiquement incompressible aux températures et pressions de fonctionnement du piston ; et en ce que le diamètre de la susdite portée cylindrique est très légèrement supérieur au diamètre de la tête partiellement sphérique de la bielle de telle façon que le jeu de fonctionnement entre lesdites portée cylindrique et tête partiellement sphérique soit suffisamment petit pour interdire toute migration dudit fluide hors dudit espace aux températures et pressions de fonctionnement du piston.

De préférence, les génératrices de la susdite portée cylindrique sont parallèles à celles de la jupe cylindrique du piston, cette portée cylindrique étant généralement coaxiale à cette jupe.

Pour éviter toute perte du susdit fluide à la longue, une mince coquille métallique étanche est avantageusement interposée entre la tête partiellement sphérique de la bielle et le susdit fluide et est maintenue localement par serrage contre la susdite portée cylindrique, l'ensemble étant tel que la partie de la coquille serrée contre la portée cylindrique puisse se déplaceer parallèlement à l'axe de cette portée cylindrique sous l'effet d'efforts dépassant une limite donnée.

Selon un deuxième aspect de l'invention, un piston destiné à coulisser dans les cylindres de moteurs alternatifs à combustion interne ou externe et compresseurs, c'est-à-dire de machines où un gaz de travail contenu dans le ou chaque cylindre par une surface transversale du piston est à la fois à haute pression et haute température, en particulier pour moteurs alternatifs à combustion interne, à deux temps de préférence ou à quatre temps, lequel piston reçoit à la manière d'une rotule la tête partiellement sphérique d'une bielle, est essentiellement caractérisé en ce qu'il possède, à l'intérieur d'une jupe extérieurement cylindrique, une cavité ouverte à l'opposé de la susdite surface transversale et limitée latéralement au moins en partie par une portée cylindrique de révolution, de préférence coaxiale au piston ; en ce qu'il est placé dans ladite cavité une mince coquille métallique étanche dont la forme est cylindrique dans sa partie inférieure serrée à force contre la portée cylindrique de révolution du piston et sensiblement hémisphérique dans sa partie supérieure contre laquelle repose la tête de bielle ; en ce que la coquille métallique, par la surface extérieure de sa partie sensiblement hémisphérique, délimite à l'intérieur de la cavité du piston, un espace empli d'un fluide visqueux ou pâteux ou plastiquement déformable mais pratiquement incompressible aux températures et pressions de fonctionnement du piston ; et en ce que le diamètre extérieur de la tête partiellement sphérique de la bielle est légèrement inférieur au diamètre de la portée cylindrique du piston de façon que la partie cylindrique de la coquille soit serrée de la manière susindiquée et que toute migration du susdit fluide hors du susdit espace soit interdite aux températures et pressions de fonctionnement du piston.

De préférence, le susdit fluide est constitué par un polymère fluoré et plus particulièrement par du PTFE (polytétrafluoréthylène) ou "TEFLON" bien que l'on puisse aussi utiliser avec profit d'autres matières chimiquement et physiquement stables aux températures et pressions de fonctionnement du piston, suffisamment déformables sous compression pour être capables de remplir le susdit espace aussi entièrement que possible (compte tenu de la présence éventuelle de la susdite coquille) mais suffisamment visqueuses pour rendre impossible en fonctionnement toute fuite dudit fluide dans le jeu de fonctionnement entre la tête de bielle partiellement sphérique ou coquille et ladite portée cylindrique. Il peut s'agir en particulier d'une huile à forte viscosité, du type utilisé par exemple dans les dampers (ou amortisseurs de vibrations) visqueux. On voit en particulier que la susdite définition du fluide exclut notamment les huiles à viscosité faible, voire moyenne.

De cette manière quelle que soit la position de la bielle par rapport au piston, les efforts exercés sur celui-ci sont transmis uniformément à la tête partiellement sphérique de la bielle par le matelas que constitue le susdit fluide déformable plastiquement, lequel est empêché de fluer hors de l'espace qui lui est attribué. En raison de la faculté dont dispose la coquille (dans le cas préféré où elle existe) de se déplacer parallèlement à l'axe de la portée cylindrique, cette coquille ne travaille pratiquement qu'en compression perpendiculaire à sa surface et elle est donc soustraite aux risques de rupture ou de perçage, le débattement axial de la coquille permettant un rattrapage de jeu automatique.

Il est à noter que le brevet français no 1.547.151 mentionnné ci-dessus propose de disposer une couche de matière plastique, telle que du PTFE, directement entre le siège partiellement sphérique d'un piston et la tête partiellement sphérique d'une bielle, mais du côté opposé à celui qui est prévu selon la présente invention et dans un but totalement différent. Il est également à noter qu'il est connu de garnir de résine synthétique, telle que du PTFE, à la fois les parties mâle et femelle d'une rotule, par exemple pour les directions de véhicules (voir le brevet U.S. no 3.342.513), afin que les éléments se déplaçant au contact l'un de l'autre soient tous deux en résine synthétique.

De préférence, la coquille métallique conforme à l'invention est faite de bronze, en particulier de bronze au béryllium, ou autre métal ou alliage ayant un bon coefficient de frottement en lubrification et une ductilité élevée limite et son épaisseur est en général comprise entre 1 % et 3 % du diamètre de la tête partiellement sphérique de la bielle.

Dans le cas du deuxième aspect de l'invention défini ci-dessus, la coquille est avantageusement agencée de façon que sa partie sensiblement hémisphérique porte sur la tête sphérique de la bielle le long d'une ligne ou bande de contact fermée circulaire située dans, ou limitée à sa partie supérieure par, un plan passant au-dessus du centre de la tête de bielle et de préférence perpendiculaire à l'axe du piston ; en ce que des moyens uni-directionnels d'arrivée d'huile de lubrification sous pression, communiquant en amont par l'intermédiaire d'un clapet anti-retour avec un passage d'huile aménagé dans la bielle, débouchent dans un interstice délimité, au-dessus de la susdite ligne ou bande de contact, par la surface de la tête partiellement sphérique et par la surface intérieure de la partie partiellement hémisphérique de la coquille métallique, la pression de l'huile de lubrification, en amont dudit clapet anti-retour, étant supérieure, au moins pendant une partie du cycle de travail du moteur, à la pression régnant dans ledit interstice ; et en ce que l'espace situé au-dessous de la susdite ligne ou bande de contact, entre la tête partiellement sphérique et la coquille, communique avec une zone de basse pression, inférieure à la pression maximale régnant dans le susdit interstice.

Ceci permet d'incorporer la coquille métallique à des moyens alimentant en huile de lubrification sous pression la surface de la tête partiellement sphérique de la bielle qui doit pouvoir pivoter librement par rapport à la surface intérieure de ladite coquille. Divers modes de réalisation du susdit interstice et des moyens d'alimentation en huile de lubrification seront décrits en détail dans ce qui suit.

De préférence encore, dans le cas préféré où la coquille métallique est prévue, la tête partiellement sphérique de la bielle ou la coquille métallique , sur sa face tournée vers la tête de bielle, est munie de rainures ou pattes-d'araignée destinées à repartir de l'huile de lubrification introduite, de façon connue ou comme indiqué ci-dessus, entre cette coquille et la tête de bielle. Il est à souligner que ces pattes-d'araignée sont soustraites au risque d'être bouchées par le PTFE ou autre substance ou fluide semblable étant donné qu'elles sont ménagées sur des surfaces qui ne sont pas en contact avec cette substance ou fluide.

En l'absence de la susdite coquille, de l'huile de lubrification sous pression pourra néanmoins alimenter une chambre annulaire limitée en partie par la tête de bielle, comme décrit ci-après, de façon à favoriser par entraînement la formation d'une pellicule d'huile de lubrification sur cette tête.

L'invention va être maintenant décrite plus en détail à l'aide des dessins annexés.

La figure 1 de ces dessins représente partiellement, en coupe axiale, l'ensemble d'un piston conforme à un premier mode de réalisation de l'invention et de la bielle correspondante.

La figure 2 représente la tête partiellement sphérique de la bielle, vue selon la flèche F de la figure 1.

La figure 3 représente les détails des parties formant rotule du piston et de la bielle, avant l'assemblage de ceux-ci.

Les figures 4 à 7 sont des schémas comparatifs qui illustrent certains avantages de l'invention.

La figure 8 représente, en demi-coupe axiale, l'ensemble d'un piston conforme à un deuxième mode de réalisation de l'invention et de la bielle correspondante.

La figure 9 représente partiellement, en coupe axiale, l'ensemble d'un piston conforme à un troisième mode de réalisation de l'invention et de la bielle correspondante.

La figure 10 représente partiellement, en coupe axiale, l'ensemble d'un piston conforme à un quatrième mode de réalisation de l'invention et de la bielle correspondante.

Les figures 11 et 12 illustrent des moyens de lubrification établis respectivement selon deux solutions différentes.

Les figures 13 et 14 illustrent une première variante du mode de réalisation de la figure 12, respectivement par une vue en coupe axiale et par une vue de dessus de la tête de bielle.

La figure 15 illustre une deuxième variante du mode de réalisation de la figure 12.

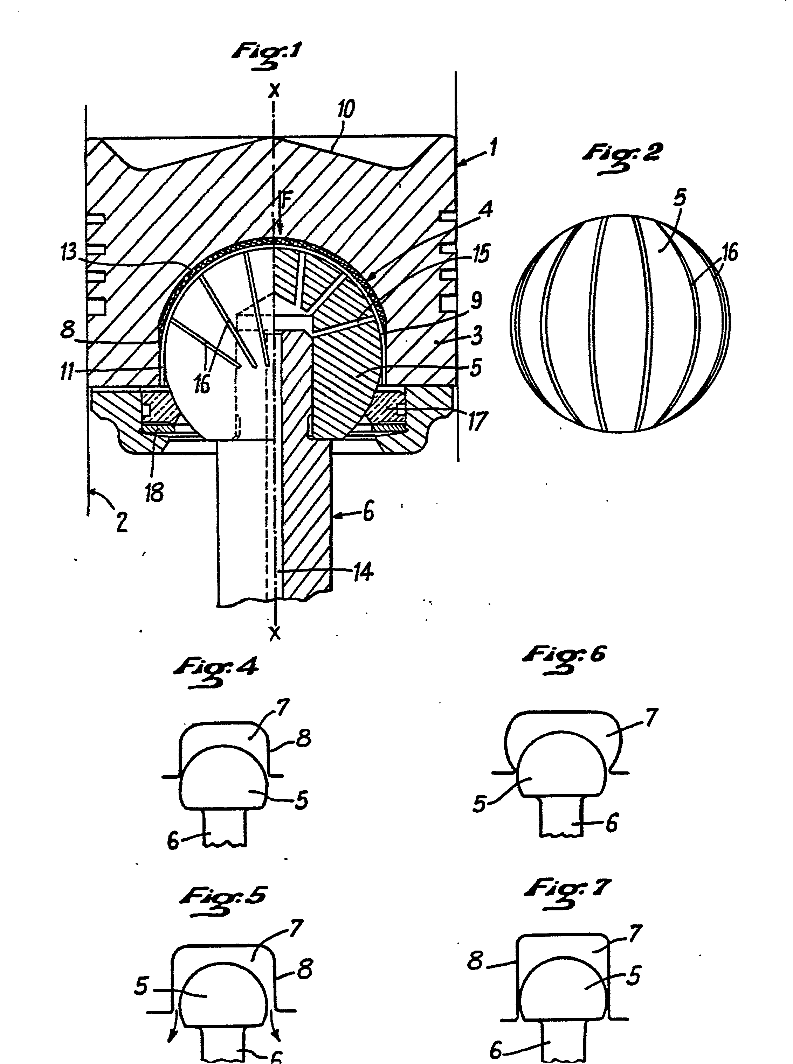

Le piston conforme au premier mode de réalisation de l'invention (figures 1 et 2), qui est désigné par 1 dans son ensemble, est destiné à coulisser dans un cylindre 2. Dans ce cylindre 2, le gaz de travail est contenu par la surface transversale 10 du piston 1.

A l'intérieur d'une jupe extérieurement cylindrique 3 (le terme "cylindrique" n'excluant bien entendu pas la présence de gorges pour segments ou analogues), le piston 1 possède une portée partiellement sphérique 4 destinée à recevoir, à la manière d'une rotule, la tête partiellement sphérique 5 d'une bielle 6.

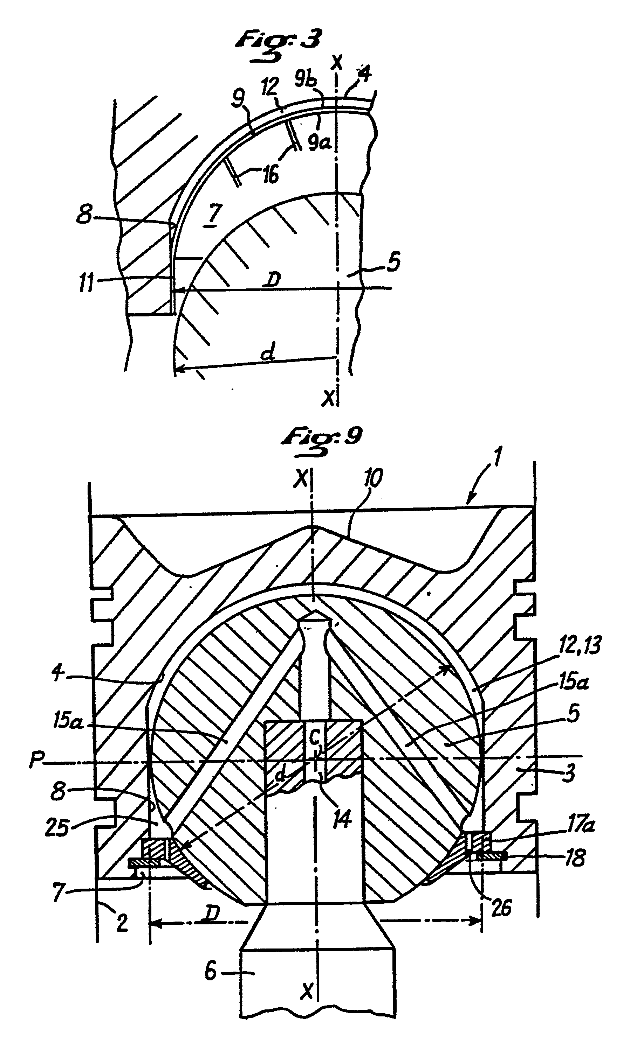

Conformément à l'invention, le piston possède une cavité intérieure 7 (voir la figure 3) limitée au moins partiellement par une portée cylindrique de révolution 8 qui est de préférence (mais pas nécessairement) coaxiale à ladite jupe 3 (l'axe commun étant désigné par X-X) et dont le diamètre D est très légèrement supérieur au diamètre d de la tête 5. La cavité 7 est ouverte vers le bas de la figure 1, c'est-à-dire à l'opposé de la surface transversale 10. Dans sa partie supérieure (selon les figures 1 et 3), la portée 4 est constituée par l'une 9a des faces, de forme approximativement hémisphérique, d'une mince coquille métallique 9, présentant sa concavité à l'opposé de la susdite surface transversale 10 du piston 1, c'est-à-dire vers le bas des figures 1 et 3, et maintenue par serrage contre la portée cylindrique 8. Enfin, l'espace 12 limité à l'intérieur de la cavité 7 par l'autre 9b des faces de la coquille 9 est rempli d'un fluide 13, visqueux ou pâteux ou plastiquement déformable et pratiquement incompressible aux températures et pressions de fonctionnement du piston 1.

Comme indiqué ci-dessus, le fluide ou substance 13 est avantageusement du polytétrafluoréthylène ou une pâte équivalente.

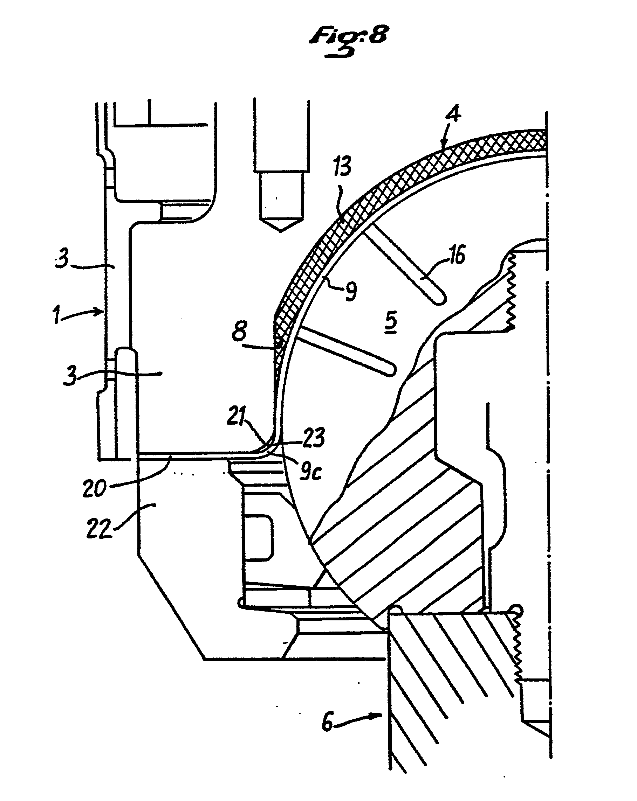

L'avantage de la forme cylindrique de révolution de la portée 8, en coopération avec la forme partiellement sphérique de la tête de bielle 5, et de la valeur attribuée à son diamètre D ressort des schémas comparatifs des figures 4 à 7 où on a omis la coquille métallique 9 soit, lorsque cette coquille existe, pour rendre le dessin plus clair, soit pour tenir compte du mode de réalisation décrit ci-après (figure 9) dans lequel cette coquille 9 est supprimée.

En effet, si le diamètre D de la portée cylindrique 8 est trop petit (figure 4), il se produit un contact métal sur métal entre la tête 5 et le bord de la portée cylindrique 8 et il n'existe pas de pression hydrostatique dans le fluide ou subtance 13.

Si le diamètre de la portée cylindrique 8 est trop grand (figure 5), il se produira des fuites latérales de la substance 13, comme schématisé par des flèches à la figure 5.

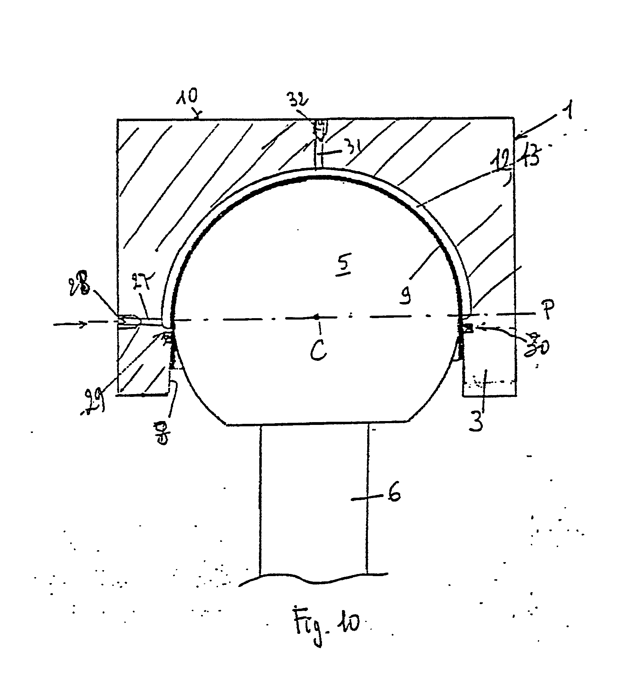

Si le diamètre d'entrée de la cavité 7 est correct mais que la portée latérale 8 de celle-ci n'est pas cylindrique (figure 6), il n'y a pas de rattrapage du jeu qui peut provenir soit d'une usure, soit d'une déformation différentielle (élastique ou non élastique), soit d'une dilatation différentielle, et il se produira à la longue des fuites latérales comme dans le cas de la figure 5.

Si la cavité 7 est agencée conformément à l'invention (figure 7), on obtient un rattrapage automatique des jeux.

Selon un mode de réalisation préféré, la coquille métallique 9 est faite de bronze, notamment de bronze au béryllium, ou autre métal ou alliage ayant un bon coefficient de frottement en lubrification limite et une ductilité élevée, étant entendu que des moyens usuels, schématisés par des canaux 14 et 15 traversant respectivement la bielle 6 et la tête 5, sont prévus pour introduire de l'huile de lubrification sous pression entre la surface extérieure de la tête 5 et la face 9a de la coquille 9.

De préférence encore, la tête partiellement sphérique 5 (figure 2) ou la coquille 9 (figure 3), sur sa face 9a, est munie de rainures ou pattes-d'araignée 16.

On obtient ainsi un piston dont le mode de fabrication ressort de ce qui précède et dans lequel on introduit dans la portée 4 la tête 5 de la bielle 6, celle-ci étant ensuite maintenue en position, tout au moins sur un piston pour moteur à combustion interne à quatre temps, par exemple par une bague rigide 17 sollicitée élastiquement vers le haut de la figure 1 par une bague élastique 18, prenant appui extérieurement sur le piston 1. Sur un piston pour moteur à combustion interne à deux temps, on peut se dispenser de moyens de maintien tels que les bagues 17-18, étant donné que les efforts s'exercent toujours dans le même sens sur le piston, au cours du cycle de fonctionnement du moteur.

En fonctionnement, la force développée sur la face supérieure du piston 1 par la pression du gaz de travail est répartie uniformément sur la tête 5 par le matelas constitué par la substance 13.

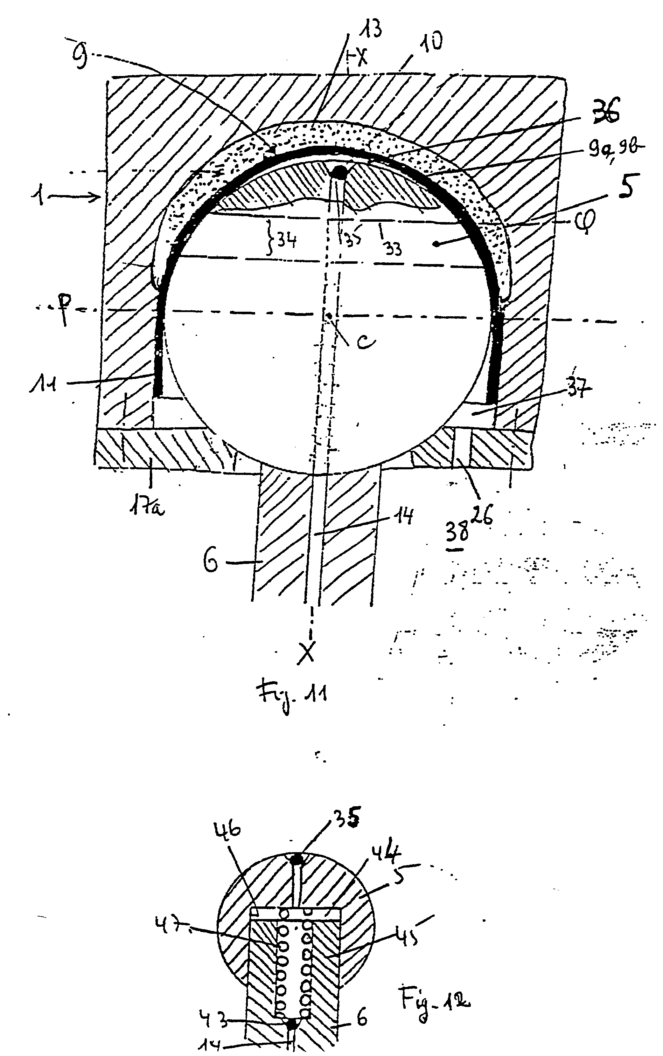

Ainsi que le montrent schématiquement les figures 1 et 8, la coquille métallique 9 peut être maintenue par serrage contre la portée cylindrique 8 du piston 1, sous réserve que cette coquille puisse se déplacer parallèlement à l'axe X-X de cette portée cylindrique sous l'effet d'efforts dépassant une limite donnée.

Selon le mode de réalisation de la figure 1, la coquille 9, dont la partie hémisphérique est prolongée par une jupe cylindrique 11 en contact avec la portée cylindrique 8 du piston 1, est montée dans le piston 1 sans autre moyen de fixation que son serrage entre la tête 5 et la portée cylindrique 8 du piston, ce serrage étant dû à un choix approprié de l'épaisseur (au repos) et/ou du diamètre extérieur de la coquille 9 et de la différence entre les susdits diamètres D et d. En général, cette épaisseur est comprise entre 1 % et 3 % du diamètre d de la tête 5.

Selon le mode de réalisation de la figure 8, la partie hémisphérique de la coquille 9 est suivie d'une jupe fortement évasée 20 qui est bloquée entre le bas de la jupe 3 du piston 1 et une bague 22 qui est fixée à ce bas de jupe par des moyens appropriés tels que des vis. Pour permettre à la coquille 9 de se déplacer parallèlement à l'axe X-X, le bas de la jupe 3 du piston 1 est muni d'une surface arrondie 21 et les dimensions de la coquille 9 et en particulier de sa jupe 20 sont déterminées, compte tenu du volume du fluide ou substance 13, pour qu'il existe au repos un jeu 23 entre la surface arrondie 21 et la partie en regard 9c de la coquille 9, ce jeu permettant à la partie 9c de se déformer sans être soumise à des efforts de traction lors du déplacement axial de la coquille 9 par rapport à la portée cylindrique 8 du piston 1.

Le mode de réalisation de la figure 9 diffère de ceux des figures 1-2 et 8 par l'absence de la coquille 9 entre la tête partiellement sphérique 5 de la bielle 6 et la portée cylindrique 8 du piston 1. En d'autres termes, la substance déformable 13 est directement en contact avec la tête 5 et est empêchée de s'échapper de la cavité 7 par le simple choix du jeu existant entre cette tête 5 et la portée cylindrique 8 (ou, ce qui revient au même, de la différence entre les susdits diamètres D et d), compte tenu des caractéristiques de viscosité de la substance 13.

De préférence, le rapport entre la surface de la section diamétrale de la tête partiellement sphérique 5 et la surface de la section transversale (mesurée perpendiculairement à l'axe X-X) du piston 1 est supérieur ou égal à 0,5, ce qui limite avantageusement les contraintes de pression exercées en fonctionnemment sur la substance 13 et la tête 5. Cette caractéristique s'applique aussi avantageusement en présence d'une coquille 9, bien que les représentations schématiques des figures 1 et 8 ne l'illustrent pas.

Selon le mode de réalisation de la figure 9, les pattes d'araignée telles que celles désignées par 16 aux figures 1, 2 et 8 ne sont pas à envisager car elles seraient bouchées par la substance 13 et tendraient à favoriser sa migration hors de l'espace qui lui est attribué. Dans ce cas, le canal d'arrivée d'huile de lubrification sous pression 14 ménagé dans la bielle 6 communique avec des canaux 15a traversant la tête de bielle 5 et débouchant en permanence au-dessous (selon la figure 9) du plan "équatorial" P, perpendiculaire à l'axe X-X et passant par le centre C de la surface partiellement sphérique de la tête 5, dans une chambre annulaire 25 limitée, au-dessous du susdit plan P, par une bague 17a, analogue à la bague 17 de la figure 1, mais munie d'orifices de sortie tels que 26 pour l'huile de lubrification arrivant dans la chambre 25 par les canaux 14 et 15a. La circulation d'huile ainsi réalisée assure d'une part un refroidissement intense de la tête de bielle 5 et éventuellement du piston 1 et d'autre part l'entretien, par entraînement, d'une pellicule d'huile de lubrification sur la tête de bielle 5.

De toute façon, la hauteur de la portée cylindrique 8 doit être suffisamment importante pour que puisse être absorbée la course axiale relative de la tête 5 de la bielle 6, par rapport au piston 1, qui correspond :
- à la dilatation thermique différentielle (due à la différence des coefficients de dilatation), et/ou
- à la compressibilité de la substance 13, et/ou
- aux tolérances de fabrication et/ou
- à des phénomènes d'usure.

Dans ce qui précède, on a supposé que le fluide 13 était constitué par du PTFE. Malgré ses avantages évidents, cette substance possède certains défauts. En particulier, de petites ou très petites déformations de la coquille 9 (lorsque celle-ci existe) risquent de ne pas être suivies du côté du matelas formé par le PTFE. De plus, le temps de relaxation transversale d'une déformation est relativement important.

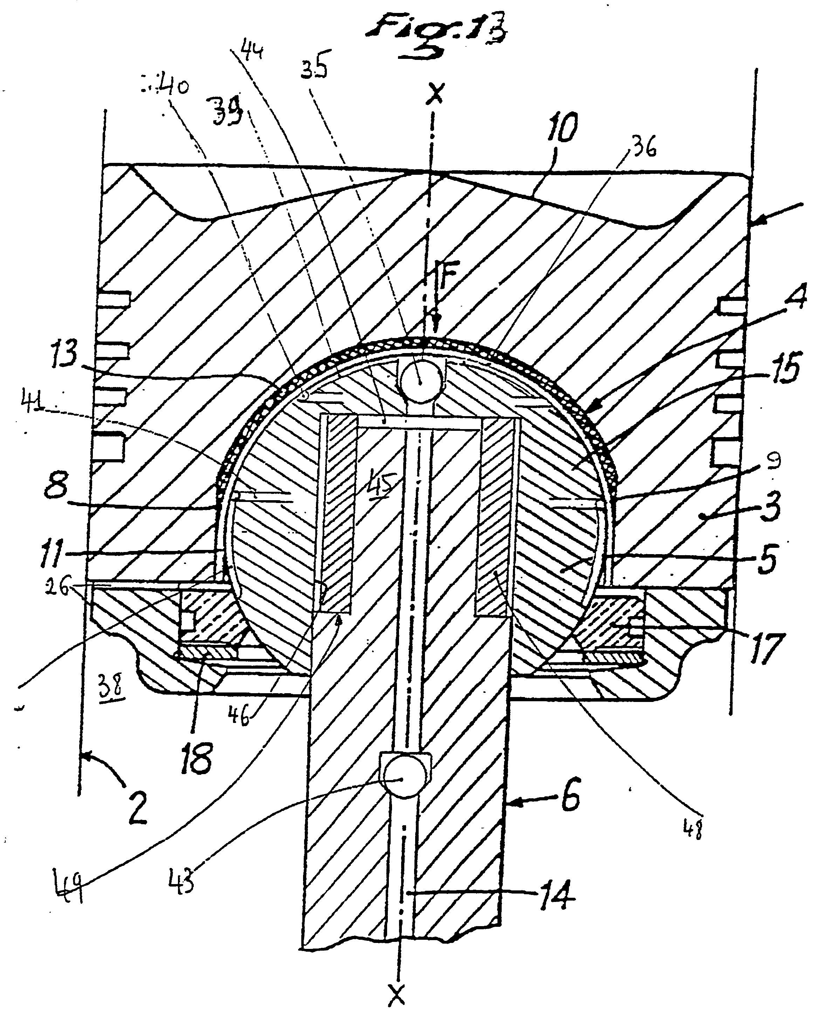

Dans certains cas, il est avantageux, pour remédier aux défauts du PTFE, de remplacer celui-ci par un liquide de forte viscosité tel que les huiles silicones utilisées dans les dampers visqueux, de préférence en combinaison avec une coquille 9 soumise, en fonctionnement, à une déformation cyclique. C'est ce qui est illustré à la figure 10 où l'espace 12 a été rempli par le bas (en position de remplissage), pour éviter toute bulle d'air, d'une huile 13 à forte viscosité à l'aide d'un orifice 27 qui a été ensuite obturé par un bouchon ou vis-pointeau 28. Lors de ce remplissage, l'air s'échappe à la partie supérieure (en position de remplissage) de l'espace 12 par un orifice de purge 31 qui est ensuite obturé par un bouchon ou vis-pointeau 32. L'espace 12 se termine à faible distance au-dessous du plan équatorial P par un arrondi 29 (et non par un biseau). Il faut en effet amener jusqu'au plan équatorial P la pression hydrostatique du matelas constitué par le liquide visqueux 13 en donnant de l'épaisseur à ce matelas jusqu'à ce plan P. Un joint annulaire 30 est logé dans une gorge ménagée de façon telle dans le piston 1 qu'elle débouche sur la portée cylindrique 8 au-dessous du susdit arrondi 29, mais aussi près que possible du plan équatorial P pour éviter que la pression hydrostatique n'écarte la coquille 9 de la portée cylindrique 8 et ne crée ainsi une fuite du liquide visqueux 13. Il est néanmoins nécessaire que l'espace 12 ait une épaisseur relativement faible, de l'ordre de 2 mm par exemple, pour que l'on puisse négliger l'influence de la compressibilité de l'huile à forte viscosité 13 et que l'on puisse donc considérer cette huile comme pratiquement incompressible aux températures et pressions de fonctionnement selon la définition générale exposée au début de cette description.

On va maintenant décrire des moyens mettant à profit la présence de la coquille 9 pour entretenir un film d'huile de lubrification entre cette coquille 9 et la tête de bielle 5.

Conformément à l'invention et comme illustré à la figure 11, pour constituer de tels moyens, on agence la coquille 9 de façon que sa partie sensiblement hémisphérique 9a, 9b porte sur la tête partiellement sphérique 5 de la bielle 6 le long d'une ligne de contact fermée circulaire 33 située dans un plan Q passant au-dessus (selon la convention exposée en préambule) du centre C de la tête de bielle 5 et de préférence perpendiculaire à l'axe X-X du piston 1. Selon une variante, la coquille 9 peut porter sur la tête 5 le long d'une bande circulaire 34 limitée à sa partie supérieure par la ligne 33 et/ou par le plan Q. Des moyens unidirectionnels d'arrivée d'huile de lubrification sous pression communiquent en amont, par l'intermédiaire d'un clapet anti-retour 35, avec le passage 14 ménagé dans la bielle 6 et débouchent dans un interstice 36 délimité par les parties de la tête de bielle 5 et de la coquille 9 qui sont situées au-dessus de la susdite ligne de contact 33 (ou bande de contact 34). On agence l'ensemble de façon telle que la pression de l'huile de lubrification, en amont du clapet anti-retour 35, soit supérieure, au moins pendant une partie du cycle de compression-détente du gaz de travail, à la pression régnant dans l'interstice 36. Enfin, l'espace 37 situé entre la tête de bielle 5 et la coquille 9, au-dessous de la ligne ou bande de contact 33 ou 34, communique avec une zone de décharge 38 à basse pression, c'est-à-dire à une pression inférieure à la pression maximale régnant dans l'interstice 36. Dans le cas où une bague 17a, analogue à celle de la figure 9, est prévue pour maintenir la tête 5 à l'intérieur du piston 1, cette bague 17a doit être traversée ou contournée par au moins un orifice ou passage 26 pour faire communiquer en permanence l'espace 37 avec la zone de décharge 38. En effet, si l'espace 37 était étanche, l'huile de lubrification stagnerait dans l'interstice 36.

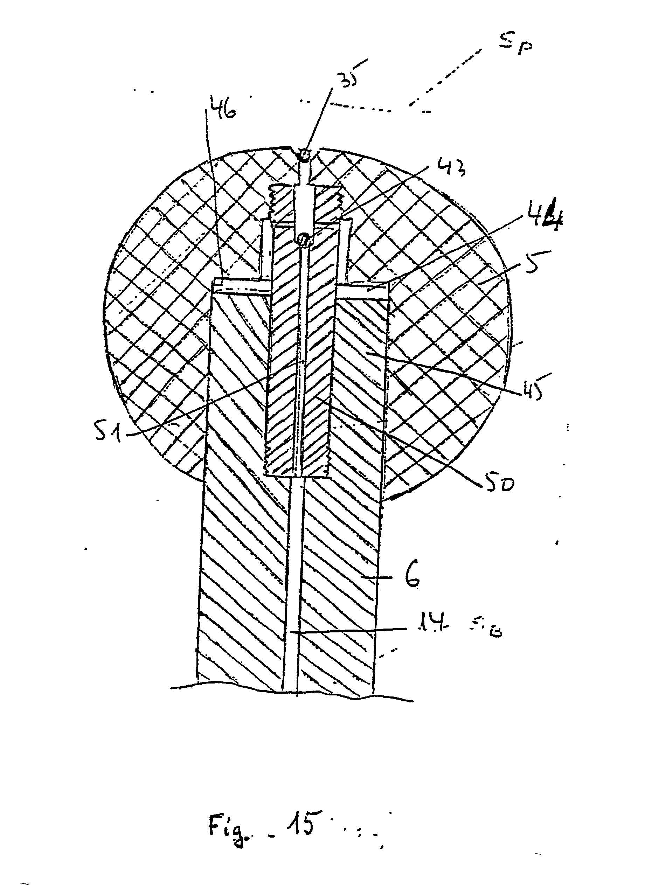

De préférence et comme représenté aux figures 13 et 14, le susdit interstice 36 est essentiellement constitué par l'espace compris entre la coquille 9 et la tête de bielle 5 et situé au-dessus de leur ligne ou bande de contact 33, 34 et par un réseau de rainures telles que 39 qui sont aménagées sur l'une au moins des surfaces, tournées l'une vers l'autre, de la coquille 9 et de la tête de bielle 5 et qui communiquent avec le débouché des moyens unidirectionnels d'arrivée de l'huile de lubrification, c'est-à-dire avec l'aval du clapet anti-retour 35. Pour simplifier le dessin, on n'a représenté qu'à la figure 11 le susdit espace compris entre la coquille 9 et la tête de bielle 5 ainsi que la ligne de contact 33 et la bande de contact 34, cette dernière étant visible en plus à la figure 14. De préférence, la largeur des rainures 39 et autres est approximativement égale à l'épaisseur de la coquille 9. En général, les rainures 39 sont des rainures méridiennes passent par cette intersection et aboutissant sur la susdite ligne ou bande de contact 33, 34. Comme pour le plan P dit "équatorial", on utilise ici le mot "méridienne" en assimilant la tête de bielle 5 à un globe terrestre dont la ligne des pôles constituerait l'axe de la bielle 6 et se confonderait avec l'axe X-X du piston 1 lorsque, comme montré par exemple à la figure 13, la bielle 6 est placée dans l'axe du piston 1.

Comme montré aux figures 14 et 15, le susdit débouché des moyens unidirectionnels d'arrivée d'huile de lubrification sous pression est situé à l'intersection de la surface partiellement sphérique de la tête de bielle 5 et de l'axe X-X de piston 1, quelle que soit la position angulaire relative de la bielle 6 et du piston 1, et les rainures 39 passent par cette intersection et aboutissent sur la susdite ligne de contact 33 ou sur la limite supérieure de la bande de contact 34.

En plus des rainures méridiennes 39, au moins une autre rainure 40 est située sur la tête 5 dans un plan méridien perpendiculaire à l'axe X-X du piston 1, au-dessus de la ligne ou bande de contact 33, 34 ou à la limite supérieure de cette bande de contact 34. Au moins une autre rainure encore 41 est située sur la tête 5 dans un plan perpendiculaire à l'axe X-X du piston 1, au-dessous de la ligne ou bande de contact 33, 34 ou à la limite inférieure de cette bande de contact 34. D'autres 42 de ces rainures peuvent encore être disposées au-dessous de cette bande de contact 34 dans des plans méridiens. En variante, les rainures 39, 40 et 41 pourraient être placées sur la surface intérieure 9b de la coquille 9, leur situation étant la même que celles des rainures prévues de préférence sur la tête de bielle 5, tout au moins lorsque la bielle 6 est alignée avec le piston 1.

Selon la solution illustrée à la figure 11, on donne à l'épaisseur de la coquille 9 et à la raideur du matériau la constituant des valeurs suffisamment faibles pour que la partie supérieure 9a, 9b quasi-hémisphérique de la coquille 9 vienne, par déformation élastique, épouser parfaitement la forme extérieure sphérique de la tête de bielle 5 lorsque la résultante des forces s'appliquant sur le piston 1 est maximale, de manière à chasser l'huile emprisonnée dans l'interstice 36 à travers la susdite ligne ou bande de contact 33, 34 en formant un film hydrostatique, vers la susdite zone de décharge 38, et suffisamment fortes pour que la coquille 9 reprenne sa forme initiale lorsque la résultante des forces s'appliquant sur le piston 1 est minimale de façon à faire chuter la pression régnant dans l'interstice 36 à une valeur inférieure à celle de la pression de l'huile amenée, par l'intermédiaire du clapet anti-retour 35, par les moyens d'arrivée d'huile unidirectionnels.

Lors des mouvements alternatifs du piston, la partie quasi-hémisphérique de la coquille 9 joue ainsi le rôle de la membrane d'une pompe à membrane, les temps d'aspiration de cette pompe étant dus à l'élargissement de l'interstice 36 et les temps de refoulement à son rétrécissement, par déformation élastique de la coquille 9.

Dans ce cas, on peut former la coquille 9 de la manière suivante :

a) En cas de coquille de forme quasi-hémisphérique au repos dans sa partie supérieure, la coquille 9 peut être formée par estampage dans une matrice lui donnant la forme requise, la tête de bielle 5 pouvant être alors parfaitement sphérique (sauf bien entendu dans sa partie inférieure par laquelle elle est reliée à la bielle 6).

Cette solution a pour inconvénient que l'interstice 36 est fixe par rapport au piston 1 et nécessite des rainures pour alimenter cet interstice à partir du débouché de l'huile qui est fixe par rapport à la bielle 6.

b) En cas de coquille hémisphérique au repos dans sa partie supérieure, la tête de bielle 5 peut être usinée de façon à dégager l'interstice 36 autour du débouché de l'huile. Cet usinage, par exemple par machine à commande numérique, peut se faire par tournage d'une pièce de révolution. On peut alors se dispenser des rainures visées au paragraphe précédent.

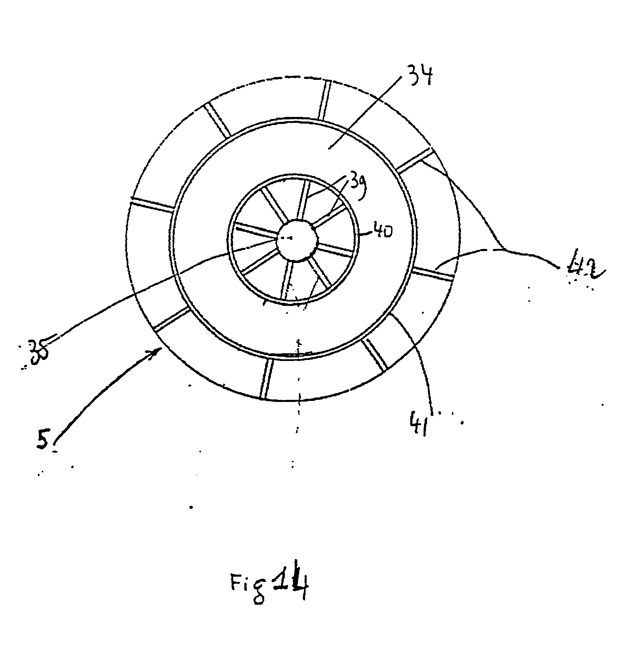

Selon une deuxième solution qui est illustrée par les figures 12 à 15, les moyens unidirectionnels d'arrivée d'huile sous pression sont constitués par une pompe à piston, incorporée à l'ensemble de la bielle 6 et de la tête de la bielle 5, qui aspire l'huile à travers un clapet d'aspiration 43 et refoule celle-ci à travers le susdit clapet anti-retour 35.

Selon une construction avantageuse, la susdite pompe est constituée par une cavité de volume variable 44 située entre le clapet d'aspiration 43 et le clapet anti-retour 35 et délimitée par le corps de la bielle 6 dont la partie supérieure 45 est aménagée de façon à former un piston coulissant axialement dans un alésage 46 usiné dans la tête de bielle 5. Un ressort est intercalé entre le corps de la bielle 6 et la tête de bielle 5.

La course de compression du susdit ressort est suffisamment élevée pour permettre à la pression de l'huile, emprisonnée dans ladite cavité 44 entre les deux clapets 35, 43, de dépasser la pression s'exerçant dans le susdit interstice 36 pendant au moins une partie du cyle de compression-détente du gaz de travail, la longueur du ressort étant suffisamment élevée pour que sa compression relative ne dépasse pas les limites de déformation élastique et de fatigue du matériau constitutif du ressort, la raideur du ressort étant suffisamment faible pour que le ressort puisse se comprimer de façon à mettre en contact les faces d'appui de la tête de bielle 5 et du corps de la bielle 6 alors que la résultante des forces s'appliquant sur le piston 1 est au plus maximale, et suffisamment forte pour que le ressort puisse se détendre alors que la résultante des forces s'appliquant sur le piston est au moins minimale.

Selon le mode de réalisation le plus simple qui est représenté schématiquement à la figure 14, le ressort en question est un simple ressort hélicoïdal 47. Des moyens mécaniques (non montrés) limitent la course de la tête de bielle 5, dans le sens de son éloignement par rapport à la bielle 6.

Selon les modes de réalisation plus élaborés qui sont représentés aux figures 13 à 15, le susdit ressort est constitué par un barreau métallique, de préférence en titane.

Selon le mode de réalisation de la figure 13, le barreau métallique, désigné ici par 48, a une forme tubulaire et entoure la partie extrême 45 du corps de la bielle 6. Cette partie 45 a une forme cylindrique rétrécie par rapport à la partie attenante du corps de la bielle 6 de façon à donner naissance à un épaulement annulaire 49 contre lequel s'appuie l'une des extrémités axiales du barreau tubulaire 48.

Selon la variante de la figure 15, le barreau métallique, désigné ici par 50, a une forme pleine mis à part un canal longitudinal 51 qui le traverse dans le prolongement du canal 14 de la bielle 6.

Quel que soit le mode de réalisation adopté, la contraction relative du barreau 48 ou 50 est de l'ordre de 0,25 %, sa section droite représentant de préférence environ 3 % de la section du piston 1.

Un barreau métallique tel que 48 ou 50, que l'on peut considérer normalement comme rigide, peut agir comme un ressort si sa section droite est suffisamment petite en regard des contraintes de compression s'exerçant sur lui, mais suffisamment forte pour rester dans le domaine de compression élastique du métal dont il est constitué. L'avantage du barreau métallique par rapport au ressort 47 de la figure 12 réside dans son encombrement réduit et dans la réduction des espaces morts nuisibles. Le choix du titane, de préférence à l'acier, est justifié par le fait que son module d'Young ($11,3.10^5$ bars) est d'environ la moitié de celui de l'acier ($22.10^5$ bars). A contrainte égale, la course de compression du barreau 48 ou 50 est deux fois plus élevée que celle d'un barreau d'acier ou, à course de compression donnée, la longueur d'un barreau de titane est deux fois plus petite que celle d'un barreau d'acier.

## Revendications

1. Piston destiné à coulisser dans les cylindres de moteurs alternatifs à combustion interne ou externe et compresseurs, c'est-à-dire de machines où le gaz de travail contenu dans le ou chaque cylindre (2) par une surface transversale (10) du piston (1) est à la fois à haute pression et à haute température, de préférence pour moteurs alternatifs à combustion interne, à deux temps ou à quatre temps, lequel piston (1) possède, à l'intérieur d'une jupe extérieurement cylindrique (3), une portée partiellement sphérique (4) destinée à recevoir à la manière d'une rotule la tête partiellement sphérique (5) d'une bielle (6), caractérisé en ce qu'il possède une cavité intérieure (7) ouverte à l'opposé de la susdite surface transversale (10) et limitée latéralement au moins en partie par une portée cylindrique de révolution (8) ; en ce que l'espace (12) limité à l'intérieur de la cavité (7) par la tête partiellement sphérique (5) de la bielle (6) est rempli d'un fluide (13) visqueux ou pâteux ou plastiquement déformable et pratiquement incompressible aux températures et pressions de fonctionnement du piston (1) ; et en ce que le diamètre (D) de la susdite portée cylindrique (8) est très légèrement supérieur au diamètre (d) de la tête partiellement sphérique (5) de la bielle (6) de telle façon que le jeu de fonctionnement entre lesdites portée cylindrique (8) et tête partiellement sphérique (5) soit suffisamment petit pour interdire toute migration dudit fluide (13) hors dudit espace aux températures et pressions de fonctionnement du piston.

2. Piston selon la revendication 1, caractérisé en ce que les génératrices de la susdite portée cylindrique (8) sont parallèles à celles de la jupe cylindrique (3) du piston (1), cette portée cylindrique (8) étant généralement coaxiale à cette jupe (3).

3. Piston selon l'une des revendications 1 et 2, caractérisé en ce qu'une mince coquille métallique (9) est interposée entre la tête partiellement sphérique (5) de la bielle (6) et la susdite substance (13) et est maintenue localement par serrage contre la susdite portée cylindrique (8), l'ensemble étant tel que la partie de la coquille (9) serrée contre cette portée cylindrique (8) puisse se déplacer parallèlement à l'axe de cette portée cylindrique (8) sous l'effet d'efforts dépassant une limite donnée.

4. Piston destiné à coulisser dans les cylindres de moteurs alternatifs à combustion interne ou externe et compresseurs, c'est-à-dire de machines où un gaz de travail contenu dans le ou chaque cylindre (2) par une surface transversale (10) du piston (1) est à la fois à haute pression et à haute température, de préférence pour moteurs alternatifs à combustion interne, à deux temps ou à quatre temps, lequel piston (1) reçoit à la manière d'une rotule la tête partiellement sphérique (5) d'une bielle (6), caractérisé en ce qu'il possède, à l'intérieur d'une jupe extérieurement cylindrique (3), une cavité intérieure (7) ouverte à l'opposé de la susdite surface transversale (10) et limitée latéralement au moins en partie par une portée cylindrique de révolution (8), de préférence coaxiale au piston (1) ; en ce qu'il est placé dans ladite cavité (7) une mince coquille métallique étanche (9) dont la forme est cylindrique (11) dans sa partie inférieure serrée à force contre la portée cylindrique de révolution (8) du piston (1) et sensiblement hémisphérique dans sa partie supérieure contre laquelle repose la tête de bielle (5) ; en ce que la coquille métallique (9), par la surface extérieure (9b) de sa partie sensiblement hémisphérique, délimite à l'intérieur de la cavité intérieure (7) du piston (1), un espace (12) empli d'un fluide visqueux ou pâteux ou plastiquement déformable mais pratiquement incompressible aux températures et pressions de fonctionnement du piston (1) ; et en ce que le diamètre extérieur (d) de la tête partiellement sphérique (5) de la bielle (6) est légèrement inférieur au diamètre (D) de la portée cylindrique (8) du piston (1) de façon que la partie cylindrique (11) de la coquille (9) soit serrée de la manière susindiquée et que toute migration du susdit fluide hors du susdit espace (12) soit interdite aux températures et pressions de fonctionnement du piston (1).

5. Piston selon l'une des revendications 3 et 4, caractérisé en ce que la coquille métallique (9) est faite de bronze, en particulier de bronze au béryllium, ou autre métal ou alliage ayant un bon coefficient de frottement en lubrification limite et d'une ductilité élevée.

6. Piston selon l'une quelconque des revendications 3 à 5, caractérisé en ce que la tête partiellement sphérique (5) de la bielle (6) ou la coquille métallique (9), sur sa face (9a) tournée vers la tête de bielle (5), est munie de rainures ou pattes-d'araignée (16) destinées à répartir de l'huile de lubrification introduite entre cette coquille (9) et la tête de bielle (5).

7. Piston selon l'une quelconque des revendications 3 à 6, caractérisé en ce que la coquille (9) est montée dans le piston (1) sans autre moyen de fixation que son serrage contre la portée cylindrique (8) du piston (1).

8. Piston selon l'une quelconque des revendications 3 à 6, caractérisé en ce que la coquille (9) comprend une partie hémisphérique suivie d'une jupe fortement évasée (20) qui est bloquée contre le bas de la jupe (3) du piston (1), l'ensemble étant tel qu'il existe au repos un jeu (23) entre le bas de la jupe (3) du piston (1) et la partie en regard (9c) de la coquille (9).

9. Piston selon l'une quelconque des revendications 3 à 8, caractérisé en ce que l'épaisseur de la coquille (9) est comprise entre 1 % et 3 % du diamètre (d) de la tête partiellement sphérique (5) de la bielle (6).

10. Piston selon l'une quelconque des revendications 1 à 9, caractérisé en ce que le susdit fluide (13) est constitué par un polymère fluoré et plus particulièrement par du polytétrafluoréthylène.

11. Piston selon l'une quelconque des revendications 1 à 9, caractérisé en ce que le susdit fluide (13) est constitué par une huile de forte viscosité, du type utilisé par exemple dans les dampers visqueux.

12. Piston selon l'une quelconque des revendications 1 à 11, caractérisé en ce que le rapport entre la surface de la section diamétrale de la tête partiellement sphérique (5) et la surface de la section transversale du piston (1) est supérieur ou égal à 0,5.

13. Piston selon l'une des revendications 3 et 4, considérée seule ou en combinaison avec l'une quelconque des revendications 5 à 12, caractérisé en ce que la coquille (9) est agencée de façon que sa partie sensiblement hémisphérique porte sur la tête partiellement sphérique (5) de la bielle (6) le long d'une ligne ou bande de contact fermée circulaire (33 ou 34), située dans, ou limitée à sa partie supérieure par, un plan (Q) passant au-dessus du centre (C) de la tête de bielle (5) et de préférence perpendiculaire à l'axe (X-X) du piston (1) ; en ce que des moyens uni-directionnels d'arrivée d'huile de lubrification sous pression communiquant en amont, par l'intermédiaire d'un clapet anti-retour (35), avec un passage d'huile (14) aménagé dans la bielle (6), débouchent dans un interstice (36) délimité par les parties de la surface de la tête de bielle (5) et de la coquille (9) situées au-dessus de la susdite ligne ou bande de contact (33, 34), la pression de l'huile de lubrification, en amont du susdit clapet anti-retour (35), étant supérieure, au moins pendant une partie du cycle de compression-détente du gaz de travail, à la pression régnant dans ledit interstice (36) ; et en ce que l'espace (37) situé entre la tête de bielle (5) et la coquille (9), au-dessous de leur susdite ligne ou bande de contact (33, 34) communique avec une zone de décharge (38) à basse pression, inférieure à la pression maximale régnant dans le susdit interstice (36).

14. Piston selon la revendication 13, caractérisé en ce que le susdit interstice (36) est essentiellement constitué par l'espace compris entre la coquille (9) et la tête de bielle (5) et situé au-dessus de leur ligne ou bande de contact (33, 34), et par un réseau de rainures (39, 40, 41, 42) qui sont aménagées sur l'une au moins des surfaces tournées l'une vers l'autre de la coquille (9) et de la tête de bielle (5) et dont la largeur est de préférence voisine de l'épaisseur de la coquille (9), lesquelles rainures (39, 40, 41, 42) communiquent avec le débouché des moyens unidirectionnels d'arrivée de l'huile de lubrification.

15. Piston selon la revendication 14, caractérisé en ce que le susdit débouché des moyens unidirectionnels d'arrivée d'huile de lubrification sous pression est situé à l'intersection de la surface partiellement sphérique de la tête de bielle (5) et de l'axe (X-X) du piston (1) et en ce que certaines au moins des susdites rainures (39) sont des rainures méridiennes passant par cette intersection et aboutissant sur la susdite ligne ou bande de contact (33, 34).

16. Piston selon l'une des revendications 14 et 15, caractérisé en ce qu'au moins l'une (40) des susdites rainures est située, de préférence sur la surface partiellement sphérique de la tête de bielle (5), dans un plan perpendiculaire à l'axe (X-X) du piston (1), tout au moins lorsque la bielle (6) est placée coaxialement au piston, et située au-dessus et/ou au-dessous de la susdite ligne ou bande de contact (33, 34).

17. Piston selon l'une quelconque des revendications 14 à 16, caractérisé en ce que certaines au moins (41, 42) des susdites rainures sont ménagées, de préférence sur la surface partiellement sphérique de la tête de bielle (5), au-dessous de la susdite ligne ou bande de contact (33, 34) et de préférence dans des plans méridiens.

18. Piston selon l'une quelconque des revendications 13 à 17, caractérisé en ce que l'épaisseur de la coquille (9) et la raideur du matériau la constituant sont suffisamment faibles pour que la partie supérieure (9a, 9b) quasi-hémisphérique de la coquille (9) vienne, par déformation élastique, épouser parfaitement la forme extérieure de la surface partiellement sphérique de la tête de bielle (5) lorsque la résultante des forces s'appliquant sur le piston (1) est maximale, de manière à chasser l'huile emprisonnée dans le susdit interstice (36) à travers la susdite ligne ou bande de contact (33, 34) en formant un film hydrostatique, vers la susdite zone de décharge, et suffisamment fortes pour que la coquille (9) reprenne sa forme initiale lorsque la résultante des forces s'appliquant sur le piston (1) est minimale de façon à faire chuter la pression régnant dans l'interstice (36) à une valeur inférieure à celle de la pression de l'huile amenée par les moyens d'arrivée d'huile unidirectionnels.

19. Piston selon l'une quelconque des revendications 13 à 17, caractérisé en ce que les moyens unidirectionnels d'arrivée d'huile sous pression sont constitués par une pompe à piston aspirant l'huile à travers un clapet d'aspiration (43) et refoulant celle-ci à travers le susdit clapet anti-retour (35).

20. Piston selon la revendication 19, caractérisé en ce que la susdite pompe est constituée par une cavité de volume variable (44) située entre ledit clapet d'aspiration (43) et ledit clapet anti-retour (35) et délimitée par le corps de bielle proprement dit dont la partie supérieure (45) est aménagée de façon à former un piston coulissant axialement dans un alésage (46) usiné dans la susdite tête de bielle partiellement sphérique (5) et en ce qu'un ressort (47) est intercalé entre ledit corps de bielle et ladite tête de bielle partiellement sphérique (5).

21. Piston selon la revendication 20, caractérisé en ce que la course de compression dudit ressort (47) est suffisamment élevée pour permettre à la pression de l'huile, emprisonnée dans ladite cavité (44) entre les deux clapets (35, 43), de dépasser la pression s'exerçant dans le susdit interstice (36) pendant au moins une partie du cycle de compression-détente du gaz de travail, la longueur du ressort (47) étant suffisamment élevée pour que sa compression relative ne dépasse pas les limites de déformation élastique et de fatigue du matériau constitutif du ressort, la raideur du ressort étant suffisamment faible pour que le ressort puisse se comprimer de façon à mettre en contact les faces d'appui de la tête de bielle (5) et du corps de la bielle (6) alors que la résultante des forces s'appliquant sur le piston (1) est au plus maximale, et suffisamment forte pour que le ressort puisse se détendre alors que la résultante des forces s'appliquant sur le piston (1) est au moins minimale.

22. Piston selon la revendication 21, caractérisé en ce que ledit ressort est constitué par un barreau métallique (48, 50).

23. Piston selon la revendication 22, caractérisé en ce que le matériau du barreau (48, 50) est du titane.

24. Piston selon la revendication 23, caractérisé en ce que la contraction relative du barreau (48, 50) est de 0,25 %.

25. Piston selon l'une des revendications 23 et 24, caractérisé en ce que la section droite du barreau (48, 50) représente environ 3 % de la section du piston (1).

**Patentansprüche**

1. Kolben zum Gleiten in den Zylindern von Kolbenbrennkraftmaschinen oder Kolbenkraftmaschinen mit äußerer Verbrennung und Verdichtern, d.h. von Maschinen, bei denen das in dem oder in jedem Zylinder (2) über einer quergerichteten Oberfläche (10) des Kolbens (1) enthaltene Arbeitsgas sich zugleich auf einem hohen Druck und auf einer hohen Temperatur befindet, vorzugsweise für Kolben-Brennkraftmotoren, wobei der Kolben (1) im Inneren eines äußerlich zylindrischen Mantels (3) einen teilweise kugelförmigen Bereich (4) besitzt, der dazu bestimmt ist, in der Art eines Kugelgelenkes den teilweise kugelförmigen Kopf (5) einer Pleuestange (6) aufzunehmen, dadurch gekennzeichnet, daß der Kolben einen inneren Hohlraum (7) aufweist, der entgegengesetzt zu der quergerichteten Oberfläche (10) offen ist und seitlich zumindest teilweise durch einen zylindrischen Rotations-Flächenbereich (8) begrenzt ist; daß der Zwischenraum (12), der im Inneren des Hohlraumes (7) durch den teilweise kugelförmigen Kopf (5) der Pleuelstange (6) begrenzt ist, mit einem Fluid (13) gefüllt ist, das viskos oder pastenartig oder plastisch verformbar ist und praktisch bei Betriebs-Temperaturen und Drücken des Kolbens (1) inkompressibel ist; und daß der Durchmesser (D) des zylindrischen Flächen-bereiches (8) sehr geringfügig größer als der Durchmesser (d) des teilweise kugelförmigen Kopfes (5) der Pleuelstange (6) ist, derart, daß das während des Betriebs herrschende Spiel zwischen dem zylindrischen Flächenbereich (8) und dem teilweise kugelförmigen Kopf (5) ausreichend gering ist, um bei Betriebs-Temperaturen und -Drücken des Kolbens jegliche Migration des Fluids (13) aus dem genannten Zwischenraum heraus zu unterbinden.

2. Kolben nach Anspruch 1, dadurch gekennzeichnet, daß die Erzeugenden des zylindrischen Flächenbereiches (8) zu denjenigen des zylindrischen Mantels (3) des Kolbens (1) parallel sind, wobei dieser zylindrische Flächenbereich (8) im allgemein koaxial mit dem Mantel (3) ist.

3. Kolben nach einem der Ansprüche 1 und 2, dadurch gekennzeichnet, daß eine dünne metallische Schale (9) zwischen den teilweise kugelförmigen Kopf (5) der Pleuestange (6) und die Substanz (13) gesetzt und durch Pressung an den zylindrischen Flächenbereich (8) örtlich festgehalten ist, wobei diese Anordnung in der Weise ausgestaltet ist, daß der an diesen zylindrischen Flächenbereich (8) gepreßte Abschnitt der Schale (9) sich parallel zu der Achse dieses zylindrischen Flächenbereiches (8) unter der Wirkung von Kräften verschieben kann, die einen vorgegebenen Grenzwert überschreiten.

4. Kolben zum Gleiten in den Zylindern von Kolben-Brennkraftmaschinen oder Kolbenkraftmaschinen mit äußerer Verbrennung und Verdichtern, d.h. von Maschinen, bei denen das in dem oder in jedem Zylinder (2) über einer quergerichteten Oberfläche (10) des Kolbens (1) enthaltene Arbeitsgas sich zugleich auf einem hohen Druck und auf einer hohen Temperatur befindet, vorzugsweise für Kolben-Brennkraftmotoren wie Zweitakt- oder Viertaktmotoren, wobei der Kolben (1) in der Art eines Kugelgelenkes den teilweise kugelförmigen Kopf (5) einer Pleuelstange (6) aufnimmt, dadurch gekennzeichnet, daß der Kolben im Inneren eines äußerlich zylindrischen Mantels (3) einen inneren Hohlraum (7) aufweist, der entgegengesetzt zu der quergerichteten Oberfläche (10) offen ist und seitlich zumindest teilweise durch einen zylindrischen Rotations-Flächenbereich (8) begrenzt ist, der vorzugsweise koaxial mit dem Kolben (1) ist; daß in dem Hohlraum (7) eine dünne, metallische, dichte Schale (9) angeordnet ist, deren Gestalt in ihrem unteren, mit Zwang an den zylindrischen Rotations-Flächenbereich (8) des Kolbens (1) gepreßten Abschnitt zylindrisch (11) und in ihrem oberen Abschnitt, gegen welchen sich der Kopf (5) der Pleuelstange abstützt, i.w. halbkugelförmig ist; daß die metallische Schale (9) durch die äußere Oberfläche (9b) ihres i.w. halbkugelförmigen Abschnittes im Inneren des inneren Hohlraumes (7) des Kolbens (1) einen Zwischenraum (12) begrenzt, der mit einem Fluid gefüllt ist, welches viskos oder pastenartig oder plastisch deformierbar ist, jedoch bei Betriebs-Temperaturen und -Drücken des Kolbens (1) praktisch inkompressibel ist; und daß der äußere Durchmesser (d) des teilweise kugelförmigen Kopfes (5) der Pleuelstange (6) geringfügig unterhalb des Durchmessers (D) des zylindrischen Flächenbereiches (8) des Kolbens (1) liegt, derart, daß der zylindrische Abschnitt (11) der Schale (9) in der wie oben angegebenen Art und Weise angepreßt wird und jegliche Migration des Fluides aus dem Zwischenraum (12) heraus bei Betriebs-Temperaturen und -Drücken des Kolbens (1) unterbunden ist.

5. Kolben nach einem der Ansprüche 3 und 4, dadurch gekennzeichnet, daß die metallische Schale (9) aus Bronze hergestellt ist, insbesondere aus Beryllium-Bronze, oder aus einem anderen Metall oder einer anderen Legierung mit einem guten Reibbeiwert hinsichtlich Grenzschmierung und mit einem erhöhten Duktilitäts-Koeffizienten.

6. Kolben nach einem der Ansprüche 3 bis 5, dadurch gekennzeichnet, daß der teilweise kugelförmige Kopf (5) der Pleuelstange (6) oder die metallische Schale (9) auf ihrer dem Kopf (5) der Pleuelstange zugewendeten Oberfläche (9a) mit Öl-Nuten oder -Rinnen (16) versehen sind, die zum Verteilen des zwischen dieser Schale (9) und dem Kopf (5) der Pleuelstange eingeleiteten Schmieröls bestimmt sind.

7. Kolben nach einem der Ansprüche 3–6, dadurch gekennzeichnet, daß die Schale (9) ohne irgendein anderes Befestigungsmittel als ihre Anpressung an den zylindrischen Flächenbereich (8) des Kolbens (1) in den Kolben (1) eingebaut ist.

8. Kolben nach einem der Ansprüche 3–6, dadurch gekennzeichnet, daß die Schale (9) einen halbkugelförmigen Abschnitt aufweist, dem eine sich stark ausweitende Schürze (20) folgt, die gegen die Unterseite des Mantels (3) des Kolbens (1) verriegelt oder blockiert ist, wobei diese Anordnung in der Weise gestaltet ist, daß im unbenutzten oder ruhenden Zustand ein Spiel (23) zwischen der Unterseite des Mantels (3) des Kolbens (1) und dem gegenüberliegenden Abschnitt (9c) der Schale (9) vorhanden ist.

9. Kolben nach einem der Ansprüche 3–8, dadurch gekennzeichnet, daß die Dicke der Schale (9) zwischen 1% und 3% des Durchmessers (d) des teilweise kugelförmigen Kopfes (5) der Pleuelstange (6) genommen ist.

10. Kolben nach einem der Ansprüche 1–9, dadurch gekennzeichnet, daß das Fluid (13) durch ein fluoriertes Polymer und insbesondere durch Polytetrafluorethylen gebildet ist.

11. Kolben nach einem der Ansprüche 1–9, dadurch gekennzeichnet, daß das Fluid (13) durch ein Öl mit hoher Viskosität gebildet ist, und zwar von der Art, wie es beispielsweise in Flüssigkeitsdämpfern benutzt wird.

12. Kolben nach einem der Ansprüche 1–11, dadurch gekennzeichnet, daß das Verhältnis zwischen der Querschnittsfläche in Durchmesserebene des teilweise kugelförmigen Kopfes (5) und der Querschnittsfläche des Kolbens (1) größer oder gleich 0,5 ist.

13. Kolben nach einem der Ansprüche 3 und 4 und zwar für sich allein betrachtet oder in Kombination mit einem der Ansprüche 5–12, dadurch gekennzeichnet, daß die Schale (9) in der Weise angeordnet ist, daß ihr i.w. halbkugelförmiger Abschnitt auf dem teilweise kugelförmigen Kopf (5) der Pleuelstange (6) längs einer (eines) geschlossenen, kreisförmigen Berührungs-Linie oder -Streifens (33 oder 34) ruht, welche Linie angeordnet ist in einer, oder welcher Streifen in seinem oberen Teil begrenzt ist durch eine Ebene (Q), welche oberhalb des Mittelpunkts des Kopfes (5) der Pleuelstange und zwar vorzugsweise senkrecht zu der Achse (X–X) des Kolbens (1) verläuft; daß in einer Richtung wirkende Mittel zur Zufuhr von Schmieröl unter Druck, welche Mittel stromaufwärts über ein Rückschlagventil (35) mit einem in der Pleuelstange (6) angeordneten Öldurchlaß (14) in Verbindung stehen, in einen Zwischenraum (36) einmünden, der durch oberhalb der Berührungs-Linie oder des Berührungs-Streifens (33, 34) angeordnete Teile der Oberfläche des Kopfes (5) der Pleuelstange und der Schale (9) begrenzt ist, wobei der Druck des Schmieröles stromabwärts bezüglich des Rückschlagventils (35) zumindest während eines Teiles des Zyklusses des Druckabfalles des Arbeitsgases, höher ist als der in dem Zwischenraum (36) herrschende Druck, und daß der zwischen dem Kopf (5) der Pleuelstange und der Schale (9) angeordnete Zwischenraum (37) unterhalb der Berührungs-Linie oder des Berührungsstreifens (33, 34) mit einer Entlastungs-Zone (38) mit niedrigem Druck kommuniziert, der niedriger als der in dem Zwischenraum (36) herrschende maximale Druck ist.

14. Kolben nach Anspruch 13, dadurch gekennzeichnet, daß der Zwischenraum (36) i.w. durch den Raum gebildet ist, der zwischen der Schale (9) und dem Kopf (5) der Pleuelstange genommen und oberhalb der Berührungs-Linie oder des Berührungs-Streifens (33, 34) angeordnet ist, und ferner durch ein Netz von Rinnen (39, 40, 41, 42), die auf wenigstens der einen der einander zugewendeten Oberflächen der Schale (9) und des Kopfes (5) der Pleuelstange angeordnet sind und deren Breite vorzugsweise an die Dicke der Schale (9) angrenzend ist, wobei die Rinnen (39, 40, 41, 42) mit dem Ausgang der in einer Richtung wirkenden Mittel zur Zufuhr von Schmieröl in Verbindung stehen.

15. Kolben nach Anspruch 14, dadurch gekennzeichnet, daß der Ausgang der in einer Richtung wirkenden Mittel zur Zufuhr von Schmieröl unter Druck im Schnittpunkt der teilweise kugelförmigen Oberfläche des Kopfes (5) der Pleuelstange und der Achse (X–X) des Kolbens (1) angeordnet ist und daß wenigstens einige der Rinnen (39) meridionale Rinnen sind, die durch diesen Schnittpunkt hindurchgehen und in die Berührungs-Linie oder den Berührungs-Streifen (33, 34) einmünden.

16. Kolben nach einem der Ansprüche 14 und 15, dadurch gekennzeichnet, daß zumindest die eine (40) der sich vorzugsweise auf der teilweise kugelförmigen Oberfläche des Kopfes (5) der Pleuelstange befindlichen Rinnen in einer senkrecht zur Achse (X–X) des Kolbens (1) verlaufenden Ebene angeordnet ist, und zwar wenigstens jedes Mal dann, wenn die Pleuelstange (6) sich in einer koaxialen Ausrichtung mit dem Kolben befindet, und daß die mindestens eine (40) der Rinnen oberhalb und/oder unterhalb der o.g. Berührungs-Linie oder des Berührungs-Streifens (33, 34) angeordnet ist.

17. Kolben nach einem der Ansprüche 14–16, dadurch gekennzeichnet, daß zumindest einige (41, 42) der Rinnen vorzugsweise auf der teilweise kugelförmigen Oberfläche des Kopfes (5) der Pleuelstange und unterhalb der Berührungs-Linie oder des Berührungs-Streifens (33, 34) und vorzugsweise in meridianen Ebenen ausgespart sind.

18. Kolben nach einem der Ansprüche 13–17, dadurch gekennzeichnet, daß die Dicke der Schale (9) und die Steifigkeit des sie bildenden Materials genügend niedrig sind, damit der obere, quasi halbkugelförmige Teil (9a, 9b) der Schale (9) durch elastische Deformation zur vollkommenen Anpassung an die äußere Form der teilweise kugelförmigen Oberfläche des Kopfes (5) der Pleuelstange gelangt, und zwar immer dann, wenn die Resultierende der auf den Kolben (1) ausgeübten Kräfte maximal ist, derart, daß das in dem Zwischenraum (36) eingeschlossene Öl durch die Berührungs-Linie oder den Berührungs-Streifen (33, 34) hindurch unter Bildung eines hydrostatischen Filmes in Richtung zu der Entlastungs-Zone getrieben wird, und daß die Dicke der Schale (9) und die Steifigkeit des sie bildenden Materials ausreichend groß sind, damit die Schale (9) ihre anfängliche Form wieder annimmt, und zwar immer dann, wenn die Resultierende der auf den Kolben (1) ausgeübten Kräfte minimal ist, derart, daß ein Abfallen des in dem Zwischenraum (36) herrschenden Druckes bis zu einem Wert veranlaßt wird, der unterhalb desjenigen des Druckes des Öles liegt, das durch die in einer Richtung wirkenden Mittel zur Ölzufuhr zugeführt wird.

19. Kolben nach einem der Ansprüche 13–17, dadurch gekennzeichnet, daß die in einer Richtung wirkenden Mittel zur Ölzufuhr unter Druck durch eine Kolbenpumpe gebildet sind, die das Öl durch ein Ansaugventil (43) hindurch ansaugt und es durch das Rückschlagventil (35) hindurch weiterfördert.

20. Kolben nach Anspruch 19, dadurch gekennzeichnet, daß die Pumpe durch einen Hohlraum (44) mit variablem Volumen gebildet ist, welcher zwischen dem Ansaugventil (43) und dem Rückschlagventil (35) angeordnet und durch den Körper der Pleuelstange im engeren Sinne begrenzt ist, deren oberer Abschnitt (45) in einer solchen Weise angeordnet ist, daß ein in axialer Richtung innerhalb einer Bohrung (46) gleitender Kolben gebildet wird, wobei diese Bohrung (46) in dem teilweise kugelförmigen Kopf (5) der Pleuelstange herausgearbeitet ist, und ferner dadurch gekennzeichnet, daß eine Feder (47) zwischen den Körper der Pleuelstange und den teilweise kugelförmigen Kopf (5) der Pleuelstange eingebracht ist.

21. Kolben nach Anspruch 20, dadurch gekennzeichnet, daß die Hubhöhe der Zusammendrückung der Feder (47) ausreichend hoch ist, um es dem Hohlraum (44) zwischen den beiden Ventilen (35, 43) eingeschlossenen Öles zu erlauben, den sich in dem Zwischenraum (36) aufbauenden Druck zumindest während eines Teiles des Zyklusses des Druckabfalles des Arbeitsgases zu überschreiten, wobei die Länge der Feder (47) ausreichend groß ist, damit ihre relative Zusammendrückung die Grenzen der elastischen Deformation und der Ermüdung des die Feder bildenden Materials nicht überschreitet, und wobei die Federhärte oder Federsteife der Feder ausreichend niedrig ist, damit die Feder sich komprimieren kann, derart, daß die Abstützflächen des Kopfes (5) der Pleuelstange und des Körpers der Pleuelstange (6) miteinander in Kontakt gebracht werden, während die Resultierende der auf den Kolben (1) ausgeübten Kräfte höchstens maximal ist, und ausreichend hoch ist, damit die Feder sich entspannen oder ausdehnen kann, während die Resultierende der auf den Kolben (1) ausgeübten Kräfte zumindest minimal ist.

22. Kolben nach Anspruch 21, dadurch gekennzeichnet, daß die Feder durch einen metallischen Stab (48, 50) gebildet ist.

23. Kolben nach Anspruch 22, dadurch gekennzeichnet, daß das Material des Stabes (48, 50) Titan ist.

24. Kolben nach Anspruch 23, dadurch gekennzeichnet, daß die relative Kontraktion des Stabes (48, 50) 0,25% ist.

25. Kolben nach einem der Ansprüche 23 und 24, dadurch gekennzeichnet, daß der Querschnitt des Stabes (48, 50) ungefähr 3% des Querschnittes des Kolbens (1) beträgt.

## Claims

1. Piston for sliding in cylinders of reciprocating internal or external combustion engines and compressors, i.e. machines in which the working gas contained in the or each cylinder (2) by a tranverse surface (10) of the piston (1) is at both high pressure and high temperature, preferably for reciprocating two-stroke or four-stroke internal combustion engines, which piston (1) has, within an externally cylindrical skirt (3), a partly spherical bearing surface (4) for receiving in the manner of a ball joint a partly spherical head (5) of a connecting rod (6), characterized in that said piston comprises an inner cavity (7) open at an end opposed to said transverse surface (10) and laterally defined at least partly by a cylindrical bearing surface (8) having a form of revolution; in that the space (12) defined inside the cavity (7) by the partly spherical head (5) of the rod (6) is filled with a viscous, pasty or plastically-deformably fluid (13) which is practically incompressible at operating temperatures and pressures of the piston (1); and in that the diameter (D) of said cylindrical bearing surface (8) is very slightly larger than the diameter (d) of the partly spherical head (5) of the rod (6) so that the operational clearance between said cylindrical bearing surface (8) and said partly spherical head (5) is small enough to prevent any migration of said fluid (13) out of said space at the operating temperatures and pressures of the piston.

2. A piston according to claim 1, characterized in that the generatrices of said cylindrical bearing surface (8) are parallel to the generatrices of the cylindrical skirt (3) of the piston (1), said cylindrical bearing surface (8) being generally coaxial with said skirt (3).

3. A piston according to any one of the claims 1 and 2, characterized in that a thin metal shell (9) is interposed between the partly spherical head (5) of the rod (6) and said substance (13) and is maintained locally by an interference fit in said cylindrical bearing surface (8), the assembly being such that the part of the shell (9) which is an interference fit in said cylindrical bearing surface (8) is movable in a direction parallel to the axis of said cylindrical bearing surface (8) under the effect of forces exceeding a given limit.

4. A piston for sliding in the cylinders of reciprocating internal or external combustion engines and compressors, i.e. machines in which a working gas contained in the or each cylinder (2) by a transverse surface (10) of the piston (1) is at both high pressure and high temperature, preferably for reciprocating two-stroke internal combustion engines, which piston (1) receives in the manner of a ball joint a partly spherical head (5) of a connecting rod (6), characterized in that said piston comprises, within an externally cylindrical skirt (3), an inner cavity (7) which is open at an end opposed to said transverse surface (10) and laterally defined at least partly by a cylindrical bearing surface (8) having a form of revolution which is preferably coaxial with the piston (1); in that there is placed in said cavity (7) a thin fluidtight metal shell (9) whose shape is cylindrical (11) in its lower part, which is an interference fit in the cylindrical bearing surface (8) having a form of revolution of the piston (1) and substantially hemispherical in its upper part against which bears the rod head (5); in that the metal shell (9) defines, by the outer surface (9b) of the substantially hemispherical part thereof, inside the inner cavity (7) of the piston (1), a space (12) filled with a viscous, pasty or plastically-deformable fluid which is practically incompressible at the operating temperatures and pressures of the piston (1); and in that the outside diameter (d) of the partly spherical head (5) of the rod (6) is slightly less than the diameter (D) of the cylindrical bearing surface (8) of the piston (1) so that the cylidnrical part (11) of the shell (9) is an interference fit in the aforementioned manner and any migration of said fluid out of said space (12) is prevented at the operating temperatures and pressures of the piston (1).

5. A piston according to any one of the claims 3 and 4, characterized in that the metal shell (9) is made from bronze, in particular beryllium bronze, or other metal or alloy having a good coefficient of friction in limit lubrication and high ductility.

6. A piston according to any one of the claims 3 to 5, characterized in that the partly spherical head (5) of the rod (6) or the metal shell (9), on the surface (9a) thereof facing toward the rod head (5), is provided with grooves or oil ways (16) adapted to distribute lubricating oil introduced between said sheel (9) and the rod head (5).

7. A piston according to any one of the claims 3 to 6, characterized in that the shell (9) is mounted in the piston (1) with no other fixing means than the interference fit thereof in the cylindrical bearing surface (8) of the piston (1).

8. A piston according to any one of the claims 3 to 6, characterized in that the shell (9) comprises a hemispherical part followed by a highly flared skirt (20) which is retained against the base of the skirt (3) of the piston (1), the assembly being such that a clearance (23) is provided at rest between the base of the skirt (3) of the piston (1) and the confronting part (9c) of the shell (9).

9. A piston according to any one of the claims 3 to 8, characterized in that the thickness of the shell (9) is between 1% and 3% of the diameter (d) of the partly spherical head (5) of the rod (6).

10. A piston according to any one of the claims 1 to 9, characterized in that said fluid (13) is formed by a fluorine polymer and more particularly polytetrafluoroethylene.

11. A piston according to any one of the claims 1 to 9, characterized in that said fluid (13) is formed by an oil of high viscosity of the type employed for example in viscous dampers.

12. A piston according to any one of the claims 1 to 11, characterized in that the ratio between the area of the diametrical section of the partly spherical head (5) and the area of the cross-section of the piston (1) is greater than or equal to 0.5.

13. A piston according to any one of the claims 3 and 4, considered alone or in combination with any one of the claims 5 to 12, characterized in that the shell (9) is so arranged that the substantially hemispherical part thereof bears on the partly spherical

12

head (5) of the rod (6) along a closed circular line or band of contact (33 or 34) contained in, or defined in the upper part thereof by, a plane (Q) extending above the centre (C) of the rod head (5) and preferably perpendicular to the axis (X–X) of the piston (1); in that unidirectional means for supplying lubricating oil under pressure communicating on the upstream side, through a check-valve (35), with an oil passage (14) provided in the rod (6), open onto an interstice (36) defined by the parts of the surface of the rod head (5) and of the shell (9) located above said line or band of contact (33, 34), the pressure of the lubricating oil, on the upstream side of said check-valve (35), exceeding, at least during a part of the compression-expansion cycle of the working gas, the pressure prevailing in said interstice (36); and in that the space (37) between the rod head (5) and the shell (9), below said line or band of contact (33, 34) thereof, communicates with a discharge zone (38) at a low pressure which is lower than the maximum pressure prevailing in said interstice (36).

14. A piston according to claim 13, characterized in that said interstice (36) is essentially constituted by the space between the shell (9) and the rod head (5) and located above the line or band of contact (33, 34) thereof, and by a network of grooves (39, 40, 41, 42) which are provided on at least one of the confronting surfaces of the shell (9) and the rod head (5), the width thereof being preferably in the neighbourhood of the thickness of the shell (9), which grooves (39, 40, 41, 42) communicate with the outlet of the unidirectional lubricating oil supply means.

15. A piston according to claim 14, characterized in that said outlet of the unidirectional means for supplying lubricating oil under pressure is located at the intersection of the partly spherical surface of the rod head (5) and the axis (X–X) of the piston (1) and in that at least some of said grooves (39) are meridian grooves passing through said intersection and leading to said line or band of contact (3, 34).

16. A piston according to any one of the claims 14 and 15, characterized in that at least one (40) of said grooves is provided, preferably on the partly spherical surface of the rod head (5), in a plane perpendicular to the axis (X–X) of the piston (1), at least when the rod (6) is placed coaxially with the piston, and located above and/or below said line or band of contact (33, 34).

17. A piston according to any one of the claims 14 to 16, characterized in that at least some (41, 42) of said grooves are provided, preferably on the partly spherical surface of the rod head (5), below said line or band of contact (33, 34) and preferably in meridian planes.

18. A piston according to any one of the claims 13 to 17, characterized in that the thickness of the shell (9) and the stiffness of the material of which it is made are of sufficiently low value to ensure that the quasi-hemispherical upper part (9a, 9b) of the shell (9) perfectly takes, by an elastic deformation, the outer shape of the partly spherical surface of the head (5) when the resultant of the forces applied to the piston (1) is maximum so as to expel the oil trapped in said interstice (36) through said line or band of contact (33, 34) by forming a hydrostatic film, toward said discharge zone, and of sufficiently high value to ensure that the shell (9) resumes its initial shape when the resultant of the forces applied to the piston (1) is minimum so as to cause the pressure prevailing in the interstice (36) to drop to a value lower than the value of the pressure of the oil supplied by the unidirectional oil supply means.

19. A piston according to any one of the claims 13 to 17, characterized in that the unidirectional means for supplying oil under pressure are constituted by a piston pump which draws the oil up through a suction valve (43) and discharges the oil through said check-valve (35).

20. A piston according to claim 19, characterized in that said pump is constituted by a cavity (44) of variable volume located between said suction valve (43) and said check-valve (35) and defined by the body of the connecting rod proper whose upper part (45) is so arranged as to form a piston which is axially slidable in a bore (46) provided in said partly spherical rod head (5) and in that a spring (47) is interposed between said body of the rod and said partly spherical rod head (5).

21. A piston according to claim 20, characterized in that the compression travel of said spring (47) is sufficient to permit the pressure of the oil trapped in said cavity (44) between the two valves (35, 43) to exceed the pressure prevailing in said interstice (36) during at least a part of the compression-expansion cycle of the working gas, the length of the spring (47) being sufficient to ensure that the relative compression thereof does not exceed the limits of elastic deformation and fatigue of the material from which the spring is made, the stiffness of the spring being sufficiently low to ensure that the spring is capable of being compressed in such manner as to put the bearing surfaces of the rod head (5) and of the body of the rod (6) in contact while the resultant of the forces applied to the piston (1) is at the most maximum, and sufficiently large to ensure that the spring is capable of extending while the resultant of the forces applied to the piston (1) is at least minimum.

22. A piston according to claim 21, characterized in that said spring is formed by a metal bar (48, 50).

23. A piston according to claim 22, characterized in that the material of the bar (48, 50) is titanium.

24. A piston according to claim 23, characterized in that the relative contraction of the bar (48, 50) is 0.25%.

25. A piston according to any one of the claims 23 and 24, characterized in that the cross-section of the bar (48, 50) represents about 3% of the cross-section of the piston (1).

Fig.1

Fig.2

Fig.4

Fig.6

Fig.5

Fig.7

*Fig. 3*

*Fig. 9*

## Fig:8

Fig. 10

Fig. 11

Fig. 12

Fig:13

EP 0 280 622 B1

Fig 14

Fig. 15